# EUROPEAN PATENT SPECIFICATION

(11) **EP 0 426 279 B1**
(45) Date of publication and mention of the grant of the patent: **05.03.1997**
(21) Application number: 90309109.8
(22) Date of filing: 20.08.1990
(51) Int. Cl.: F16C 33/34

(54) **Hollow roller bearing and method of making and mounting same**
Hohlrollenlager und sein Herstellungs- und Montageverfahren
Palier à rouleaux creux et méthode de sa fabrication et montage

(30) Priority: 11.10.1989 US 420059; 08.05.1990 US 520851
(43) Date of publication of application: 08.05.1991
(73) Proprietor: ZRB BEARINGS, INC, Harwinton, Connecticut 06791 (US)
(72) Inventor: Bowen, William L., Harwinton, Connecticut 06791 (US)
(74) Representative: Archer, Philip Bruce

(56) References cited:
- EP-A- 0 015 688
- US-A- 3 016 720
- US-A- 3 410 618
- US-A- 3 527 513
- US-A- 4 002 380

## Description

Hollow roller bearings have heretofore been used successfully but in a limited number of applications. The following U.S. Patents are at least partially indicative of the state of the art in this area.

| | Title | Inventor |
|---|---|---|
| 3,765,0̸71 | Method of Forming a Roller Bearing of Superior Runout Characteristics | Willard L. Bowen |
| 3,930̸,693 | Full Complement Bearing Having Preloaded Hollow Rollers | Willard L. Bowen |
| 4,0̸0̸2,380̸ | Roller Bearing of Superior Run-Out Characteristics | Willard L. Bowen |
| 4,232,914 | Hollow Roller Tapered Bearing | Willard L. Bowen |

These patents are at least indicative of the history of development of hollow roller bearings and set forth to several advantages associated therewith. The hollow roller bearings disclosed by the patents, however, are subject to a serious disadvantage in use. The customer must initially press the inner race onto the shaft or the like, grind the race to the proper diameter for an interference it, and thereafter the shaft with the inner race thereon is assembled within the rollers and the flanged outer race to provide a desired preload. This method of assembly is of course quite time consuming and cumbersome with the bearings being shipped to the customer in separate parts.

There is disclosed in US-A-2 943 894 an anti-skid bearing for high rotational speeds such as in jet engines. The bearing employs a cage and to avoid skidding of the rolling elements the outer ring of the bearing is deformed into a "tri-oval" shape, thus causing roller preloading at 3 localised circumferentially spaced lines or zones whereby to achieve a positive driving force against the roller elements. There is disclosed in US-A-3 410 618 a bearing according to the preamble of claim 1 in which hollow rollers are substituted for the solid rollers of this earlier US patent, thereby to limit the degree of preload as well as the contact stress on the outer ring.

EP-A-0 015 688 (= US-A-4,232,914) discloses a bearing having hollow rollers with an axially tapered shape, but with no disclosure of relevance to the problem of convenient fitting and loading of roller bearings for the purposes of the present invention.

An object of the present invention is to provide one or more improvements in relation to hollow roller bearings, having regard to the shortcomings of previously proposed roller bearings, particularly with regard to mounting and loading the bearings, or generally.

According to the invention there is provided a preloaded bearing assembly as defined in the accompanying claims.

In an embodiment, hollow roller bearings are manufactured with inner and outer races and at least the former has opposing axially spaced generally radially outwardly projecting shoulders. A plurality of hollow rollers are provided with the bearings arranged in an annular series circumaxially about the inner race and within the outer race. The rollers are hollow throughout their length and are hollow by diameter in the range 55% to 75%. On assembly within the races, a slight internal radial clearance is provided for and the bearing is thereafter preloaded as required in the course of mounting the same on a shaft or the like. An interference fit between the inner bearing race and the shaft or the like serves to radially preload the bearings as required for highly efficient and accurate operation as set forth in the foregoing patents.

Preferably, at least two axially adjacent annular series of hollow rollers are provided in assembled relationship of the bearings and three or more such annular series of axially adjacent hollow rollers may be provided within the contemplation of the invention.

The outer bearing race may be provided with a constant internal diameter throughout its length or may have one or more annular shoulders or other features.

The inner bearing race may have constant internal diameter or, a tapered bearing may be provided in accordance with the invention, wherein the inner bearing race is of course provided with a frusto-conical internal surface.

The extent or degree of preload is such that the elastic limit of the material of the races is not exceeded and may be of the order of 25.4 µm (0.001 inch) and may even exceed 25.4 µm (0.001 inch) with the hollow rollers of the present invention.

### DESCRIPTION OF THE DRAWINGS

Fig. 1 of the drawings is an end view of an improved hollow roller bearing constructed in accordance with the present invention.

Fig. 2 is a vertical sectional view taken generally as indicated by the line 2, 2 in Fig. 1.

Fig. 3 is a vertical sectional view through a hollow roller bearing similar to that shown in Fig. 2 but having two (2) axially adjacent annular series of rollers

Fig. 4 is a vertical sectional view similar to Fig. 3 but showing a tapered hollow roller bearing design.

Fig. 5 is a vertical sectional view similar to Figs. 2 through 4 but illustrates a hollow roller bearing construction wherein three (3) axially adjacent annular series of rollers are provided.

Fig. 6 is an end view of the bearing of Fig. 3 taken as indicated at 6, 6.

### DESCRIPTION OF PREFERRED EMBODIMENTS

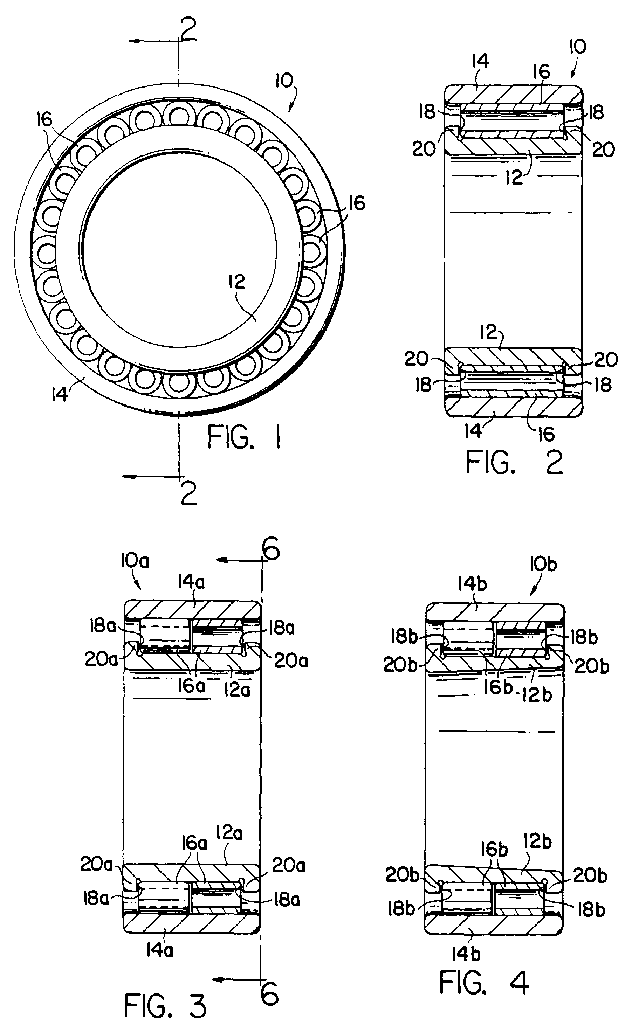

Referring to particularly to Figs. 1 and 2, it will be observed that an improved hollow roller bearing constructed in accordance with the present invention is indicated generally at 10̸ and comprises inner and outer races 12, 14, and a plurality of hollow rollers indicated at 16, 16. As best illustrated in Fig. 2 the inner race 12 has opposing generally radially outwardly projecting shoulders 18, 18 which serve to restrain the rollers 16, 16 against axial movement. The shoulders 18, 18 are formed by similar radially outwardly projecting annular end flanges 20̸, 20̸.

As will be observed, the rollers 16, 16 are hollow throughout their length and they may also exhibit other characteristics as set forth in the foregoing patents. More particularly, the hollow rollers 16, 16 are preferably hollow by diameter in the range 55% to 75%.

It is an important feature of the present invention that the hollow rollers 16, 16 are preloaded when the bearings are in fully assembled condition on a shaft or the like and ready for use. Further description in this regard may be found in the foregoing patents. Preferably, the preload of the hollow rollers is of the order of 25.4 µm (0.001 inch) and may even be in excess of 25.4 µm (0.001 inch). The elastic limit of the material of the races is in no event exceeded and all rollers are preloaded equally.

Despite the necessary preloaded condition of the bearings in their operational mode, it is important to note that, in accordance with the present invention, the hollow rollerS are not preloaded in their initial assembled condition. That is, the hollow rollers 16, 16 are disposed in the bearing between the inner and outer races 12 and 14 in a relatively loose arrangement. With a small radial clearance in the bearing, the outer race can be readily assembled about the rollers after they have been disposed between the shoulders of the inner race. The clearance may vary in accordance with the invention but is preferably in the range of 2.54 µm to 25.4 µm (0.0̸0̸0̸1" to 0.0̸0̸1").

Prior to entering their operational mode, the assembled bearings of the present invention are pressed onto a shaft or the like with a slight interference or press fit. This causes preloading of the rollers due to the resulting expansion of the inner race and it should be noted at this point that the extent or degree of preload is not critical except for the aforementioned elastic limit limitation. Considerable flexibility is afforded by the hollow rollers without any resulting overstressing of bearing parts. Hollow rollers of the invention are able to withstand an appreciable preload in excess of 25.4 µm (0.0̸0̸1 inches) without detriment to running surfaces of the races or rollers.

The foregoing is of course not true with regard to solid roller bearings. When a solid roller bearing is pressed on to a shaft in order to obtain a preload, it is an extremely difficult matter to properly preload the bearing without over-stressing the bearing elements. The permissible preload with solid roller bearings is on the order of 2.54 µm to 5.08 µm (0.0̸0̸0̸1 inches to 0.0̸0̸0̸2 inches). Preloads in excess of these limits tend to cause high contact stresses on running surfaces and may result in spalling and premature failure.

It should also be noted that the loose assembly of the bearing elements in accordance with the present invention results in improved shelf life of the bearings. The internal radial clearance allows a film of oil to coat the bearing race and roller surfaces. If, on the other hand, the bearing were first preloaded and then stored, contact corrosion might occur where the preloaded rollers and roller races are held in tight engagement. Such continuing contact pressure squeezes out the lubricant between the rollers and the raceways resulting in metal-to-metal contact. This in turn results in fretting corrosion and/or pitting of the roller and raceway surfaces.

In Fig. 3, a bearing constructed in accordance with the present invention is indicated generally at 10̸a and includes inner and outer races 12a and 14a. Hollow rollers 16a, 16a disposed between the inner and outer races are arranged in two axially adjacent annular series. The bearing may otherwise be regarded as substantially identical with the bearing 10̸ of Figs. 1 and 2.

The bearing of Fig. 3 is provided with a small radial clearance during initial assembly as in the case of the bearing 10̸ and is provided with shoulders 18a, 18a on its inner race 12a formed by flanges of 20̸a, 20̸a as in the case of the bearing 10̸. Thus, the bearing 10̸a may be assembled with the bearings loosely retained in position and thereafter pressed onto a shaft or the like to preload the rollers 16a, 16a. All of the advantages set forth above are exhibited by the bearing 10̸a.

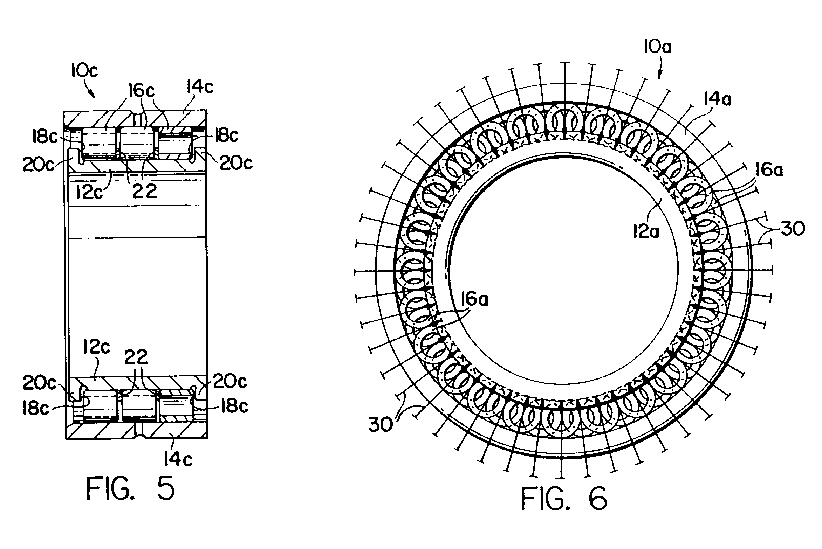

In addition to the foregoing, the multiple annular series of rollers improves the runout accuracy of the bearing. The greater number of preloaded rollers provides for a greater number of centering forces as illustrated by arrows 30̸, 30̸ in Fig. 6 with the rollers in circumaxially staggered relationship. This arrangement also serves to maintain a more constant center of rotation. The radial accuracy and stiffness of the bearing is thus substantially enhanced.

It should also be noted that hollow rollers of limited axial dimension as in the bearing 10̸a are much easier to manufacture. The drilling of a short hole is much more readily accomplished than in the case of the relatively long central bore in the rollers 16, 16 of Fig. 1. Further, roller size and shape is more readily maintained at low tolerances in shorter rollers.

The increased accuracy of a bearing with multiple series of hollow rollers will also be evident. Raceway variations in one annular series of rollers will have no effect on the rollers in an adjacent series. The preloading results in a sharing of the load by all of the rollers and the greater number of rollers provides less variation which might otherwise affect the radial runout of the bearing.

Finally, the multiple annular series of rollers can readily accommodate the construction of extremely wide bearings to carry large loads. As many as four series of rollers have been employed successfully and it is contemplated that even more annular series of rollers could be employed due to the fact that preloading allows all rollers to share the load.

In Fig. 4 a bearing 10̸b is identical in all respects with the bearing 10̸a of Fig. 3 except for the provision of a conventional tapered bearing configuration. That is, the inner diameter of the inner race 12a in Fig. 3 is constant as illustrated whereas the inner diameter of the inner race 12b in Fig. 4 is frusto-conical to provide a conventional tapered bearing design. Both the method of manufacturing and assembling the bearing as well as the mounting method described above are fully applicable to the Fig. 4 bearing.

In Fig. 5 a bearing 10̸c is provided with three (3) axially adjacent annular series of hollow rollers 16c, 16c. The bearing is otherwise substantially identical with the bearings described above except for the provision of spacers 22, 22 between the centrally located series of rollers and each end series of rollers. It has been found that the bearing of Fig. 5 can be provided with or without the spacers 22, 22. Substantially identical results in terms of efficiency and accuracy are achieved in operation in either event.

The methods of making and mounting the bearings of the present invention will be apparent from the foregoing. As suggested, a first step in the method of making a roller bearing in accordance with the present invention resides in the manufacture of inner and outer roller bearing races with at least the inner race having opposing axially spaced generally radially outwardly projecting shoulders. A plurality of rollers are provided and are hollow throughout their length and hollow by diameter in the range 55% to 75%. Initial assembly of the bearing requires that the races and the rollers be assembled without a preload and instead with a slight internal radial clearance.

The method of mounting the bearings of the present invention includes the foregoing steps and the additional step of assembling a bearing on a shaft or the like with a slight interference fit whereby to radially preload the bearing. As stated, significant tolerance is permissible in preloading and a highly efficient and accurate operation ensues.

As will be apparent from the foregoing a seemingly minor advance in the aforesaid methods and bearing design results in very substantial practical improvements and in significant economic advantage. The grinding of inner bearing races is achieved with substantial facility and is much more readily accomplished than the grinding of channel type outer races. The bearings may be readily assembled in loose engagement at the manufacturing plant and thereafter preloaded by the customer during mounting of the same on a shaft, spindle etc. A simple and expedient procedure is provided and yet results in a high degree of efficiency and accuracy inherent with hollow roller bearings. A number of other secondary advantages and features are also realized as described above.

## Claims

1. A preloaded bearing assembly comprising a shaft and a cylindrical roller bearing (10) comprising inner and outer roller bearing races (12, 14) at least the former of which has opposing axially spaced generally radially outwardly projecting shoulders (18), and a plurality of rollers (16) which are hollow throughout their length and hollow by diameter in the range 55% to 75%, characterised in that said races (12, 14) and rollers (16) are so dimensioned relatively as to be in an initial assembled relationship without preload and with a slight internal radial clearance, whereby the races (12, 14) and the rollers (16) are assembled unitarily with the shaft so that, with said shaft being dimensioned so as to provide a slight interference fit with said inner race (12), to take up said slight internal radial clearance and to preload said bearing (10), the elastic limit of said inner bearing race (12) is not exceeded.

2. A bearing assembly according to claim 1 characterised in that at least two axially adjacent annular series of hollow rollers (16a, 16b, 16c) are provided in assembled relationship with said races (12, 14).

3. A bearing assembly according to claim 1 characterised in that at least three axially adjacent annular series of hollow rollers (16c) are provided in assembled relationship with said races (12, 14).

4. A bearing assembly according to claim 1 characterised in that said opposing shoulders are formed by outwardly projecting annular flanges (20, 20a, 20b, 20c) on said the inner bearing race (12).

5. A bearing assembly according to claim 2 characterised in that said outer bearing race (14) has a constant internal diameter throughout its length.

6. A bearing assembly according to claim 1 wherein said inner bearing race (12) has a constant internal diameter throughout its length.

7. A bearing assembly according to claim 1 characterised in that said inner bearing race (12b) has a frusto-conical internal surface.

## Patentansprüche

1. Vorgespannte bzw. vorbelastete Lageranordnung, umfassend eine Welle und ein zylindrisches Rollenlager (10), umfassend innere und äußere Rollenlagerlaufflächen (12,14), wovon zumindest die zuerst genannte gegenüberliegende axial beabstandete generell radialwärts nach außen vorspringende Schultern (18) aufweist, und eine Mehrzahl von Rollen bzw. Walzen (16), welche hohl über ihre Länge und hohl im Durchmesser in dem Bereich von 55 % bis 75 % sind, dadurch gekennzeichnet, daß die Laufflächen (12, 14) und die Rollen (16) relativ so ausgelegt sind, daß sie in einer anfänglichen zusammengebauten Beziehung ohne Vorspannung und mit einem leichten internen radialen Freiraum bzw. Spiel vorliegen, wodurch die Laufflächen (12,14) und die Rollen (16) einstückig mit der Welle verbunden sind, so daß, wenn die Welle so ausgelegt ist, daß sie eine leichte Wechselwirkungspassung mit der inneren Lauffläche (12) bereitstellt zum Aufnehmen des leichten internen radialen Freiraumes und zum Vorspannen des Lagers (10), die elastische Grenze der inneren Lagerlauffläche (12) nicht überschritten wird.

2. Lageranordnung nach Anspruch 1, dadurch gekennzeichnet, daß zumindest zwei axialwärts benachbarte ringförmige Serien von hohlen Rollen (16a, 16b, 16c) in einer zusammengebauten Beziehung mit den Laufflächen (12,14) bereitgestellt sind.

3. Lageranordnung nach Anspruch 1, dadurch gekennzeichnet, daß zumindest drei axialwärts benachbarte ringförmige Serien von hohlen Rollen (16c) bereitgestellt sind in zusammengebauter bzw. angeordneter Beziehung mit den Laufflächen (12,14).

4. Lageranordnung nach Anspruch 1, dadurch gekennzeichnet, daß die gegenüberliegenden Schultern gebildet sind durch nach außen vorspringende ringförmige Flansche (20,20a,20b,20c) an der inneren Lagerlauffläche (12).

5. Lageranordnung nach Anspruch 2, dadurch gekennzeichnet, daß die äußere Lagerlauffläche (14) einen konstanten inneren Durchmesser über die Länge aufweist.

6. Lageranordnung nach Anspruch 1, bei welcher die innere Lagerlauffläche (12) einen konstanten inneren Durchmesser über die Länge aufweist.

7. Lageranordnung nach Anspruch 1, dadurch gekennzeichnet, daß die innere Lagerlauffläche (12) eine fructo-konische innere Fläche aufweist.

## Revendications

1. Ensemble à palier préchargé comprenant un arbre et un palier à rouleaux cylindriques (10) comportant des chemins interne et externe de roulement (12, 14) pour rouleaux, au moins le chemin de roulement interne présentant des épaulements (18) opposés, axialement espacés et se projetant vers l'extérieur de manière généralement radiale, et une pluralité de rouleaux (16) qui sont creux sur toute leur longueur et en diamètre d'environ 55 % à 75 %, caractérisé en ce que lesdits chemins de roulement (12, 14) et les rouleaux (16) sont dimensionnés de manière à être dans un état initial assemblé sans précharge et avec un léger jeu radial interne, de sorte que les chemins de roulement (12, 14) et les rouleaux (16) soient assemblés unitairement avec l'arbre, ledit arbre étant dimensionné de manière à ménager un léger ajustement d'interférence avec ledit chemin de roulement interne (12) pour compenser ledit léger jeu radial interne et précharger ledit palier (10), la limite élastique dudit chemin de roulement interne (12) du palier n'étant pas dépassée.

2. Ensemble à palier selon la revendication 1, caractérisé en ce qu'au moins deux séries annulaires adjacentes axialement de rouleaux creux (16a, 16b, 16c) sont pourvues desdits chemins de roulement (12, 14) dans un état assemblé.

3. Ensemble à palier selon la revendication 1, caractérisé en ce qu'au moins deux séries annulaires adjacentes axialement de rouleaux creux (16c) sont pourvues desdits chemins de roulement (12, 14) dans un état assemblé.

4. Ensemble à palier selon la revendication 1, caractérisé en ce que les épaulements opposés sont constitués par des portées annulaires se projetant vers l'extérieur (20, 20a, 20b, 20c) ménagées sur ledit chemin de roulement (12) du palier.

5. Ensemble à palier selon la revendication 2, caractérisé en ce que le chemin de roulement extérieur (14) présente un diamètre interne constant sur toute sa longueur.

6. Ensemble à palier selon la revendication 1, dans lequel le chemin de roulement intérieur (12) présente un diamètre interne constant sur toute sa longueur.

7. Ensemble à palier selon la revendication 1, caractérisé en ce que ledit chemin de roulement intérieur (12) présente une surface interne tronconique.
